# EUROPÄISCHE PATENTSCHRIFT

(11) **EP 0 295 726 B1**
(45) Veröffentlichungstag und Bekanntmachung des Hinweises auf die Patenterteilung: **29.09.1993**
(21) Anmeldenummer: 88200787.5
(22) Anmeldetag: 25.04.1988
(51) Int. Cl.: G11B 15/02

(54) **Magnetbandkassettengerät mit einer von einem Motor angetriebenen, hin und zurück längsverschiebenlichen Servostange**
Magnetic-type cassette apparatus with a motor-driven servo rod which is axially movable in opposite directions
Appareil à cassette à bande magnétique avec barre d'asservissement pouvant être animée d'un mouvement de va-et-vient axial par un moteur

(30) Priorität: 13.06.1987 DE 3719890
(43) Veröffentlichungstag der Anmeldung: 21.12.1988
(73) Patentinhaber: Philips Patentverwaltung GmbH, 22335 Hamburg (DE); Philips Electronics N.V., 5621 BA Eindhoven (NL)
(72) Erfinder: Klös-Hein, Karl, D-6301 Wettenberg 2 (DE); Rumpf, Hermann, D-6348 Herborn- Schönbach (DE)
(74) Vertreter: Kupfermann, Fritz-Joachim, Dipl.-Ing.

(56) Entgegenhaltungen:
- EP-A- 0 095 815
- EP-A- 0 210 692
- GB-A- 2 018 001
- GB-A- 2 149 189

## Beschreibung

Die Erfindung bezieht sich auf Magnetbandkassettengerät mit einem Laufwerk, das Wickelteller für ein Magnetband und eine von einem Motor angetriebene, hin und zurück längsverschiebliche Servostange aufweist, die Funktionsteile des Gerätes, wie eine Kopfplatte, einen Lademechanismus und über ein Steuerglied und Schaltmittel eine Logikschaltung steuert.

Bei Magnetbandkgeräten, die zum Abspielen von Bandkassetten, insbesondere sogenannten Compact-Kassetten eingerichtet sind, ist es bekannt, den Magnetkopf gegenüber dem in der Kassette angeordneten Magnetband zu verstellen. Dieses Verstellen findet statt durch die Verstellung einer den Magnetkopf tragenden Kopfplatte. Üblicherweise ist auch ein Lademechanismus vorgesehen, in den eine Compact-Kassette einschiebbar ist und der die eingeschobene Compact-Kassette dann in eine Spielstellung überführt. Dazu wird üblicherweise eine Lift-Vorrichtung eingesetzt. Die Bandlaufrichtung wird bei sogenannten Autoreverse-Geräten von der Motordrehrichtung bestimmt, wobei Druckrollen gegen eine erste oder eine zweite Tonwelle angedrückt werden und die Wickelteller abwechselnd in der einen oder anderen Richtung angetrieben werden.

Aus der EP-A 0 095 815 ist darüber hinaus ein Magnetbandgerät mit einem Laufwerk bekannt, bei dem die Wickelteller von einem auch die Tonwellen antreibenden Motor angetrieben werden. Die Servostange ist dabei in ihrer Längsrichtung hin und zurück durch einen Servomotor antreibbar. Zur Ausübung von Steuerfunktionen wird die Servostange zunächst immer in eine Referenzstellung gefahren werden, aus der heraus dann die verschiedenen Funktionen abgeleitet werden, indem an der Servostange angeordnete Kontaktfederarme beim Verschieben der Servostange Kontaktbahnen abfahren. Entsprechend der Kontaktbahnbelegung schalten Schaltmittel eine Logikschaltung, über die dann die Laufwerksfunktionen geschaltet werden. Dies ist sowohl mechanisch als auch elektrisch aufwendig und erfordert viel Zeit zwischen dem Außerbetriebsetzen einer Spielfunktion und dem erneuten wieder in Betrieb nehmen.

Aufgabe der Erfindung ist es, unter Benutzung einer bekannten Servostange ein Magnetbandkassettengerät zu schaffen, bei dem die Steuerabläufe zum Umsteuern von Gerätefunktionen zeitlich verkürzt sind.

Die gestellte Aufgabe ist erfindungsgemäß dadurch gelöst, daß der die Servostange verschiebende Motor zusätzlich auch dem Antrieb der Wickelteller dient und daß von der Stellung des Steuergliedes, dessen Position bestimmt wird von der Servosstange und der Kopfplatte, die Stellung eines drehbaren Schaltorgans abgeleitet wird, das die Schaltmittel für die Logikschaltung des Motors bedient, das den Motor mit der Servosstange kraftschlüssig kuppelt und das die Wickelteller während der Umschaltung von Gerätefunktionen vom Motor freistellt.

Das Steuerglied wird dabei sowohl von der Servostange als auch von der Kopfplatte beeinflußt. Somit wird die Position des Steuergliedes sowohl von der Kopfplatte als auch von der Servostange bestimmt. Das bedeutet, daß einerseits die Kopfplatte einen Umschaltvorgang steuern kann und daß andererseits auch die Servostange Umsteuerfunktionen über das Steuerglied vornehmen kann. Die Position des Steuergliedes bestimmt seinerseits die Verdrehung des Schaltorganes derart, daß dieses mit Hilfe der Schaltmittel über die Logikschaltung den Motor bedienen und somit die Laufwerksfunktionen beeinflussen kann. Weiterhin sorgt das Steuerglied über das drehbare Schaltorgan dafür, daß der Motor mit der Steuerstange kraftschlüssig gekuppelt wird, so daß die Steuerstange ihrerseits Funktionssteuerungen ausüben kann. Die dritte Funktion des Schaltorganes besteht schließlich darin, daß es die Wickelteller während der Umschaltung von Gerätefunktionen vom Motor freistellt und mithin praktisch während der Umschaltung von Gerätefunktionen den Antrieb des Magnetbandes aussetzt. Gibt das drehbare Schaltorgan den Wickeltellerantrieb frei, dann kann derselbe Motor, der die Servostange antreibt, auch wahlweise den einen oder den anderen Wickelteller antreiben. Erwähnt sei auch, daß derselbe Motor auch die Druckrollen umschalten kann.

Nach einer weiteren Ausgestaltung der Erfindung ist vorgesehen, daß das Schaltorgan ein Schaltrad trägt, das während der Umschaltung der Gerätefunktionen den Motor mit der Servostange kraftschlüssig kuppelt. Durch das wahlweise Kuppeln von Servostange und Motor über das Schaltrad lassen sich rasch Umschaltfunktionen verwirklichen, während der Motor in den Zeiten, in denen das Schaltrad nicht mit der Servostange gekuppelt ist, einen der Wickelteller antreibt bzw. die Druckrollen umsteuert.

Nach einer weiteren Ausgestaltung der Erfindung ist vorgesehen, daß die Einleitung des Kupplungsvorganges des Schaltrades immer vom Zusammenwirken von Steuerglied und Schaltorgan bewirkt wird, wobei das Schaltorgan in eine Kupplungsposition geschwenkt wird, in welcher Kupplungsposition es verbleibt durch das Zusammenwirken mit dem Steuerglied oder der Steuerstange. Somit gibt es zwei Möglichkeiten für das Verbleiben des Schaltrades in der Kupplungsstellung, und zwar einerseits über die Position des Steuergliedes und andererseits in Abhängigkeit des Schaltrades von seiner Drehrichtung gegenüber der Servostange.

Nach einer weiteren Ausgestaltung der Erfindung ist vorgesehen, daß das Schaltorgan ein Betätigungsglied, ein Freigabeglied und ein Positionierglied aufweist, die zusammenarbeiten mit dem Steuerglied, mit einem Schwenkarm des Wickeltellerantriebes und mit der Servostange. Die drei unterschiedlichen Glieder des Schaltorgans können für sich bestimmte Funktionen ausüben, die abgestimmt sind mit dem Bewegungsablauf des Steuergliedes, des Schwenkarmes und der Servostange.

Nach einer weiteren Ausgestaltung der Erfindung ist vorgesehen, daß das Schaltorgan als in einer Drehrichtung federbelasteter dreiarmiger Schalthebel ausgebildet ist, der die genannten Glieder aufweist. Damit kann das Steuerglied das Schaltorgan entgegen der Federkraft in der einen Richtung verschwenken, und beim Zurückfahren kann das Schaltorgan unter seiner Federbelastung andere Positionen einnehmen.

Nach einer weiteren Ausgestaltung der Erfindung ist vorgesehen, daß das Betätigungsglied das Schaltrad trägt und eine Schräge aufweist, über die das Betätigungsglied mit einer Schräge des Steuergliedes zusammenwirkt. Das Betätigungsglied kann das Schaltrad damit mit einem vom Motor angetriebenen Zentralzahnrad in Verbindung bringen, wobei die Schrägen dieses In-Eingriff-bringen zuverlässig durchführen.

Nach einer weiteren Ausgestaltung der Erfindung ist vorgesehen, daß das Positionierglied einen Leitstift trägt, der an der Servostange in zwei Positionen anliegen kann. Über diesen Leitstift kann das Schaltorgan gegenüber der Servostange zwei bestimmte Positionen einnehmen unabhängig von der Position des Steuergliedes.

Nach einer weiteren Ausgestaltung der Erfindung ist vorgesehen, daß das Freigabeglied eine breite Gabel trägt, die die Bewegung des Schwenkarmes während der Umschaltung der Gerätefunktionen derart begrenzt, daß der Antrieb der Wickelteller unwirksam ist. Auf diese Weise kann bei einer Position des Schaltorgans, in der die Servostange Umschaltfunktionen steuert, der Motor die Wickelteller nicht antreiben. Dies ist wichtig zu einer Entkupplung der Funktionen-Umsteuerung und des Bandantriebes.

Nach einer weiteren Ausgestaltung der Erfindung ist vorgesehen, daß das Steuerglied als Steuerhebel ausgebildet ist, dessen eines Ende mit der Kopfplatte und dessen anderes Ende mit der Servostange zusammenwirken, wobei der Steuerhebel längsverschieblich und drehbar geführt ist, und daß Federmittel vorgesehen sind, die den Steuerhebel in Richtung auf die Kopfplatte und in einer Drehrichtung drängen. Das Steuerglied ist damit in gewisser Weise schwimmend gelagert und kann unterschiedliche Positionen einnehmen zwischen Kopfplatte und Servostange. Dies ist wichtig für die Steuerung des Schaltorganes in bestimmten Umschaltfunktionen. Außerdem ist es wichtig für die Steuerung der Servostange gegenüber der Kopfplatte.

Nach einer weiteren Ausgestaltung der Erfindung ist vorgesehen, daß das genannte andere Ende einen Fahrstift aufweist, der in einer Einrichtungskulisse der Servostange umlaufen kann während der Hin- und Zurückbewegung der Servostange. Wenn der Fahrstift gegenüber der Servostange in der einen Richtung läuft, dann nimmt er aufgrund der Einrichtungskulisse und der in ihr vorgesehenen Schadow-Klinke in der einen Richtung eine andere Position gegenüber der Servostange ein als in der anderen Richtung.

Nach einer weiteren Ausgestaltung der Erfindung ist vorgesehen, daß die Kopfplatte ein Basisteil mit Magnetkopf und Andruckrollen sowie einen ersten Schenkel aufweist und um einen Eckbereich zwischen Basisteil und erstem Schenkel schwenkbar angeordnet ist, wobei am freien Ende des ersten Schenkels eine Steuernase und eine gegenüber dem ersten Schenkel federbelastete Transportnase vorgesehen ist, die mit dem Steuerglied bzw. der Servostange zusammenarbeiten. Die Transportnase wird dabei von der Servostange beaufschlagt, während die Steuernase von dem Steuerglied beaufschlagt wird. Hierbei ist es notwendig, daß bei der Transportnase eine Art von Überhub möglich ist, um Deformationen der Kopfplatte und der Servostange zu verhindern.

Nach einer weiteren Ausgestaltung der Erfindung ist vorgesehen, daß die Kopfplatte U-förmig ausgebildet ist und einen zweiten Schenkel aufweist, dessen Länge gegenüber der Basis verlängerbar ist und der in der Nähe seines freien Endes mit einem Elektromagneten zusammenwirkt zum Festlegen der Kopfplatte in zwei Arbeitspositionen. Somit kann die Kopfplatte über die Servostange in zwei unterschiedliche Arbeitspositionen gebracht und in diesen unterschiedlichen Arbeitspositionen festgehalten werden.

Nach einer weiteren Ausgestaltung der Erfindung ist vorgesehen, daß die Schaltmittel einen Steuerschalter mit einer Schalternase aufweisen, die entweder von dem Schaltorgan oder von der Servostange schaltbar ist. Wenn über Steuerglied und Schaltorgan bestimmte Drehlagen des Schaltorganes abgerufen werden, dann wird entsprechend den Verdrehungen des Schaltorganes die Steuernase beaufschlagt, die dann über die Logikschaltung des Gerätes den Motor steuert. Auch die Servostange kann über dieselbe Schalternase die Logikschaltung bedienen und über die Logikschaltung den Motor steuern. Wichtig ist, daß die elektrische Schaltung des Motors erst vorgenommen wird nach einer mechanischen Verstellung des Schaltorganes. Somit ist die genaue Position der Schalternase unkritisch. Dies vereinfacht den Aufbau des Gerätes.

Nach einer weiteren Ausgestaltung der Erfindung ist vorgesehen, daß die Schalternase von dem Positionierglied oder einem Schaltansatz an der Servostange schaltbar ist. Entweder das Positionierglied oder der Schaltansatz an der Servostange sorgen damit für die Beaufschlagung der Schalternase.

Nach einer weiteren Ausgestaltung der Erfindung ist vorgesehen, daß die Servostange mit einem Liftschieber des Lademechanismus über ein Kupplungsglied zusammenwirkt, wobei der Liftschieber die Höhenlage eines Liftschachtes des Lademechanismus steuert. Damit gibt es eine gegenseitige Beeinflussung des Liftschiebers und der Servostange, wobei in einer Richtung beim Einschieben der Kassette der Liftschieber die Servostange mitnehmen und in der anderen Richtung die Servostange den Liftschieber mitnehmen kann.

Nach einer weiteren Ausgestaltung der Erfindung ist vorgesehen, daß der Liftschieber parallel zur Servostange gegenüber dem Gerätechassis verschieblich ist und an dem Gerätechassis über eine Übertotpunktfeder abgestützt ist, wobei im Zusammenhang mit dem Einschieben einer Kassette in den Liftschacht die Übertotpunktfeder über den Liftschieber und das Kupplungsglied die Servostange in Richtung auf die Transportnase über einen bestimmten Weg verschiebt. Die Übertotpunktfeder sorgt also dafür, daß sich der Liftschieber nach dem Einschieben der Kassette selbsttätig noch weiter verschiebt und dabei die Servostange mitnimmt, bis der Motor den Antrieb übernimmt.

Nach einer weiteren Ausgestaltung der Erfindung ist vorgesehen, daß bei dieser Bewegung der Fahrstift des Steuergliedes einen Teil der Einrichtungskulisse durchläuft und dabei das Steuerglied derart verstellt, daß seine Schräge über die Schräge des Betätigungsgliedes den Motor über das Schaltrad mit der Servostange kuppelt und die Schaltmittel bedient. Nachdem damit mittels der Übertotpunktfeder die Servostange weitergeschoben worden ist, läßt sich der Motorantrieb zuverlässig einschalten und sorgt der Steuerschalter für die weitere Bewegung der Servostange über die Motorbewegung. Die Servostange kann damit, motorgesteuert, die weiteren Schaltfunktionen ausüben.

Die Erfindung wird anhand der Zeichnung näher erläutert. Es zeigen:
Fig. 1 eine schaubildliche Ansicht des Laufwerkes eines Magnetbandgerätes,
Fig. 2 schaubildlich anhand einer Explosionsansicht den Liftmechanismus und den Steuermechanismus einer Kopfplatte und des Liftmechanismus,
Fig. 3 den Mechanismus des Gerätes in Eject-Position in schematischer Darstellung,
Fig. 4 den Mechanismus nach Fig. 3 in seiner Spielposition,
Fig. 5 den Mechanismus nach Fig. 3 in der Stand-by-Position und
Fig. 6 den Mechanismus nach Fig. 3 in einer Schnellspul-Stellung.

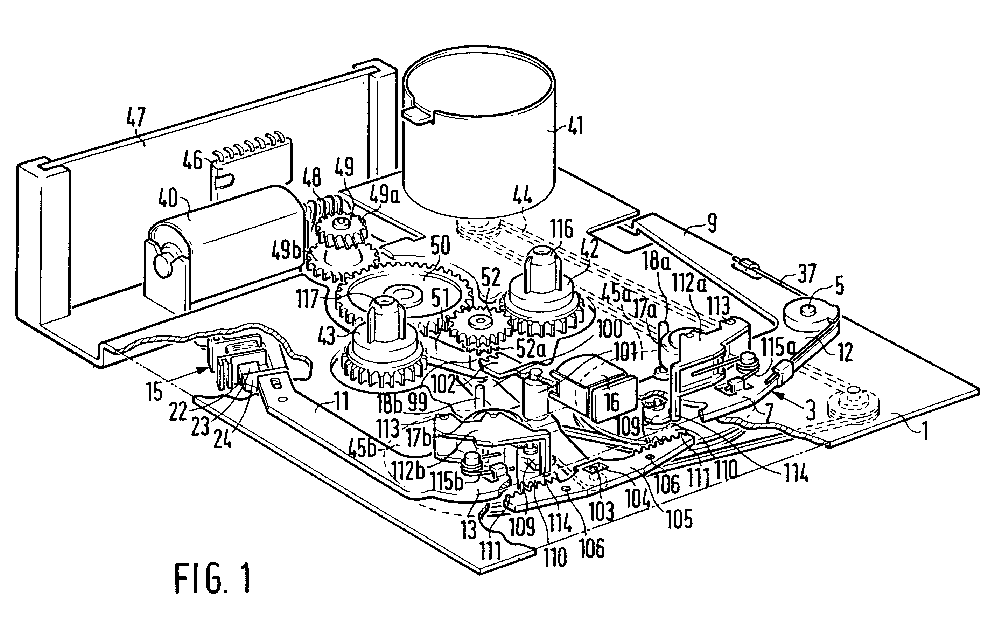

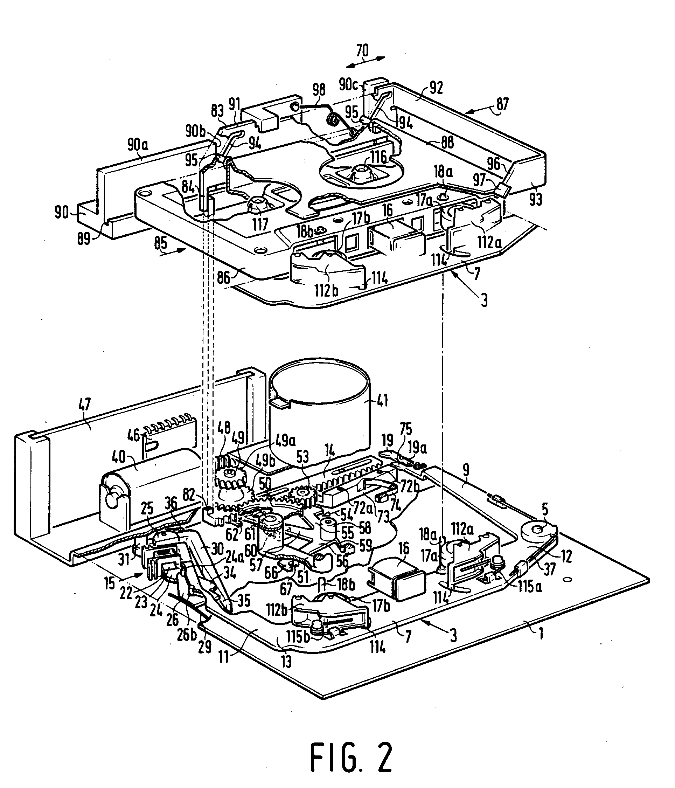

Die Fig. 1 und 2 zeigen eine als Gestell wirkende Chassisplatte 1 eines Magnetband-Kassettengerätes mit einer Kopfplatte 3, die um einen exzentrischen Drehpunkt 5 verschwenkbar ist. Die Kopfplatte 3 ist U-förmig ausgestaltet und weist von den Enden ihrer Basis 7 in gleicher Richtung abstehende erste und zweite Schenkel 9 und 11 auf. Die Schenkel 9 und 11 greifen in Eckbereichen 12 und 13 an. Während der erste Schenkel 9 mit einer Servostange 14 (in Fig. 1 nicht zu sehen) zusammenwirkt, bildet der zweite Schenkel 11 ein Funktionsteil, welches mit einer Elektrohaltemagnetvorrichtung 15 zusammenarbeitet.

Die Basis 7 der Kopfplatte 3 trägt einen Magnetkopf 16 und Andruckrollen 17a, 17b, die gegenüber der Basis 7 verschwenkbar sind. Die Andruckrollen 17a und 17b können mit Tonwellen 18a und 18b zusammengeführt werden, um das Magnetband in der einen oder anderen Richtung an dem Magnetkopf 16 vorbei zu führen.

Die Verschwenkung der Kopfplatte 3 erfolgt jeweils über die Servostange 14. Diese Servostange 14 wirkt auf eine federbelastete Transportnase 19 ein, die am Schenkel 9 schwenkbar angeordnet ist. Über die Servostange 14 kann die Kopfplatte 3 um den exzentrischen Drehpunkt 5 schwenken, und dabei bei jedem Anstoßen mittels der Servostange 14 im Uhrzeigersinn drehen.

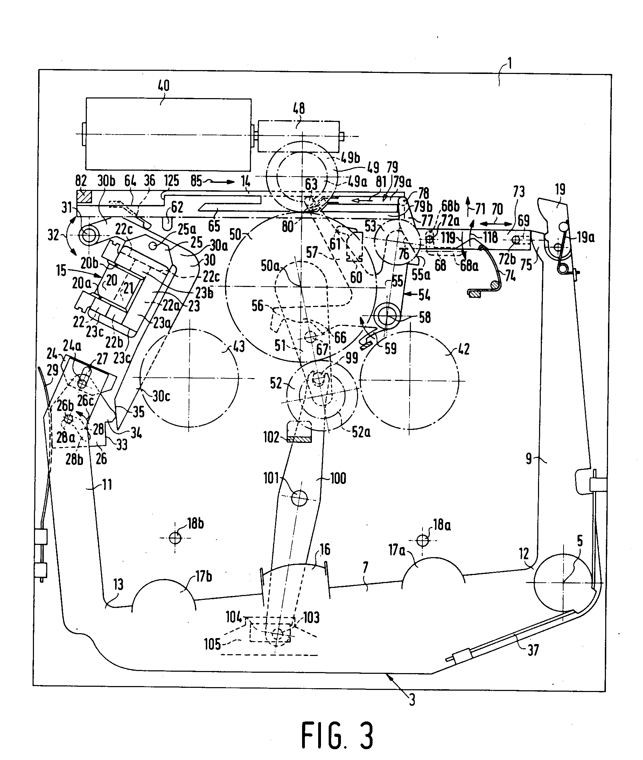

Die Elektrohaltemagnetvorrichtung 15 besteht aus einer Magnetspule 20, in deren Spulenhohlraum 21 (Fig. 3) Schenkel U-förmiger, magnetisch voneinander getrennter Ankereisen 22, 23 eingeschoben sind. Die beiden Ankereisen 22, 23 liegen übereinander, wobei sich die jeweiligen Ankereisenschenkel 22a, 23a paarweise überdecken. Die Eisenjoche 22b, 23b liegen an gegenüberliegenden Spulenenden 20a, 20b. Die Elektrohaltemagnetvorrichtung 15 ist auf der Chassisplatte 1 fest montiert.

An den freien Schenkelenden sind Polschuhe 23c und 22c ausgebildet, die mit einer ersten Ankerplatte 24 und eine zweite Ankerplatte 25 zusammenarbeiten. Die erste Ankerplatte 24 ist mittels eines Stiftes 24a drehbar auf einem Schlitten 26 angeordnet. Dieser Schlitten 26 greift mit dem Stift 24a in eine Leitnut 27 des Schenkels 11. Ein Führungsstift 26b des Schlittens 26 kann in einer gekrümmten Nut 28 des Funktiontsteiles 11 entlang geführt werden. Die bogenförmige Nut 28 verläuft unter einem schrägen Winkel bogenförmig in Richtung auf die Elektrohaltemagnetvorrichtung 15 zu. Eine Feder 29 sorgt dafür, daß der Führungsstift 26b im Normalfall in den Endbereich 28a der bogenförmigen Nut 28 einfährt. In dieser Stellung verläuft der Schlitten 26 oberhalb des Schenkels 11 parallel zu diesem.

Die zweite Ankerplatte 25 ist auf einem Arm 30 mittels eines Stiftes 25a drehbar angeordnet. Der Arm 30 selbst ist L-förmig ausgestaltet und hat einen kürzeren Armteil 30a, der auch die zweite Ankerplatte 25 trägt und der an seinem Ende 30b um eine Drehachse 31 drehbar ist in Richtung eines Doppelpfeiles 32. Ein längerer Armteil 30c erstreckt sich parallel zu der Magnetspule 20 bis zu einer Seitenfläche 33 des Schlittens 26, wo er in der Nähe einer Nase 34 des Schlittens mit einer schrägen Auflauffläche 35 endet.

Die Ankerplatten 24 und 25 können, wenn sie an die Polschuhe 23c bzw. 22c angelegt sind, bei Erregen der Magnetspule 20 an den Polschuhen haften. Durch dieses Haften können sie zwei Arbeitsstellungen der Kopfplatte 3 so lange bestimmen, wie die Magnetspule 20 erregt ist. Erst wenn die Magnetspule 20 entregt wird, fallen beide oder auch nur eine Ankerplatte, je nachdem ob beide oder nur eine angelegt waren, ab, und eine Feder 37, die auf die Basis 7 der Kopfplatte 3 einwirkt, kann die Kopfplatte 3 entgegen dem Uhrzeigersinn in eine Ruhestellung verschwenken. Einzelheiten der Elektrohaltemagnetvorrichtung sind in der DE-Patentanmeldung P 37 14 704.8 (PHD 87-084) beschrieben.

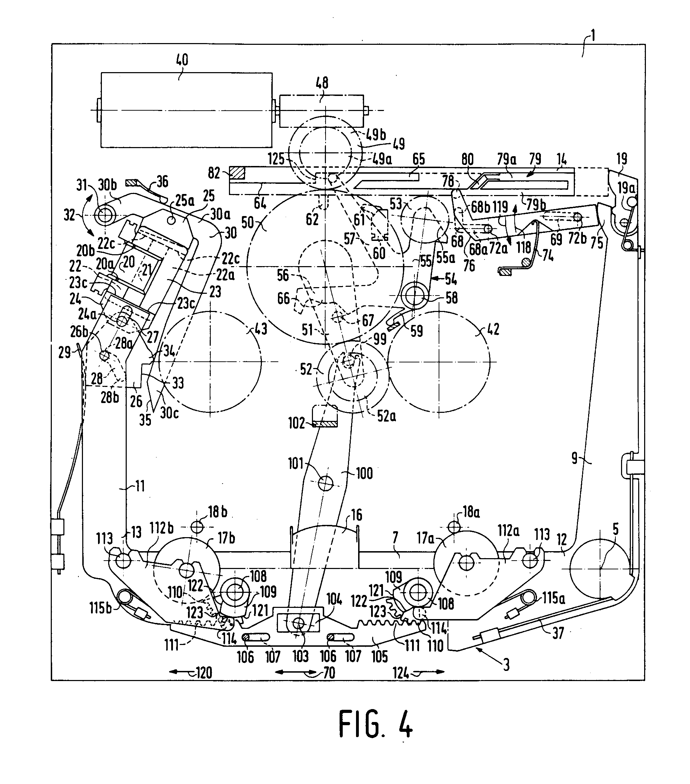

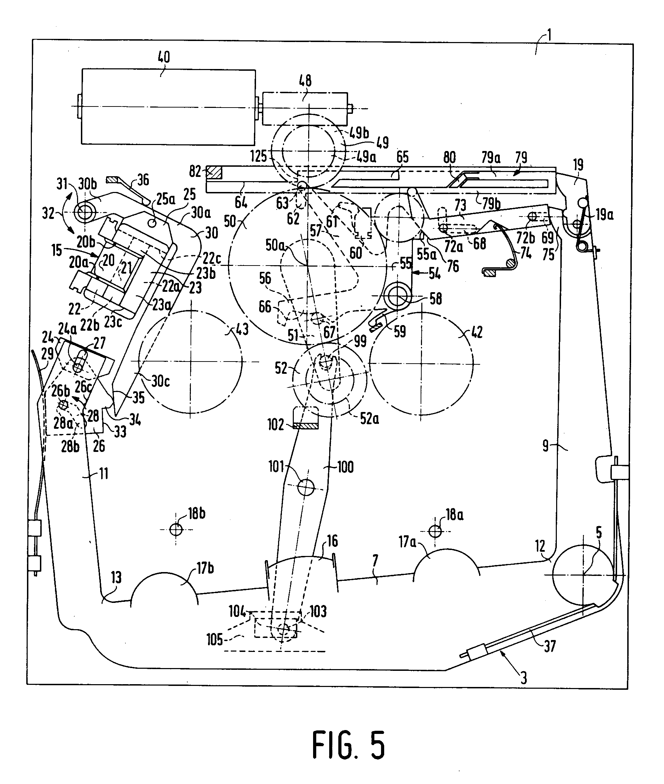

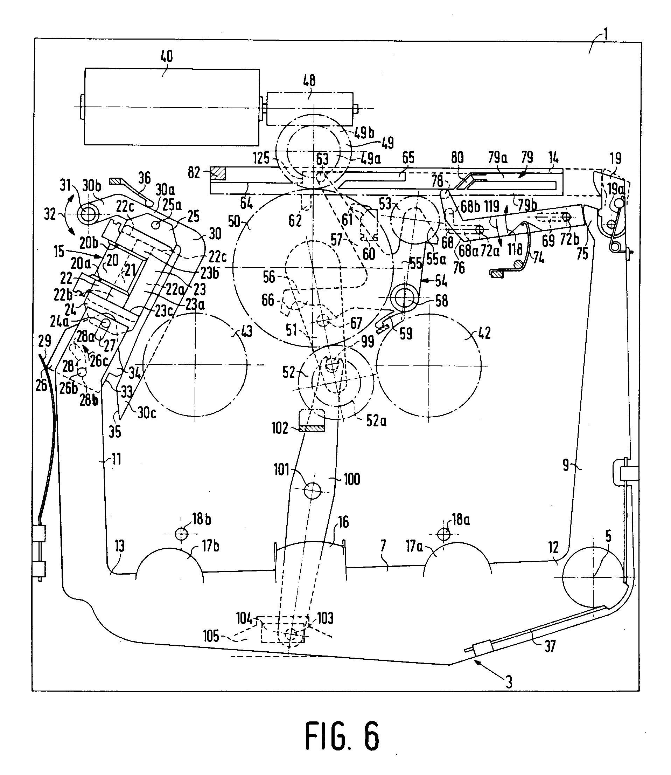

Es wird nun das Zusammenwirken der Kopfplatte mit dem Elektrohaltemagneten anhand von deren Funktion näher beschrieben. Fig. 5 zeigt die sogenannte Stand-by- oder ruhestellung. Die Magnetspule 20 ist entregt, und die Ankerplatte 24 ist von den Polschuhen 23c des Ankereisens 23 abgerückt. Die Ankerplatte 25 liegt an den Polschuhen 22c an, da eine Feder 36 für eine ständige Anlage sorgt. Die Feder 37 hält die Kopfplatte 3 im Gegenuhrzeigersinn verschwenkt in der Ruhe- oder Stand-by-Stellung. Sowohl der Magnetkopf 16 als auch die Andruckrollen 17a und 17b geben ein nicht dargestelltes Magnetband, welches zwischen den Andruckrollen/Tonwellenpaaren 17a, 18a/17b, 18b vor dem Magnetkopf 16 vorbeiläuft, völlig frei. Soll die Kopfplatte nun in die Spielstellung, d. h. eine erste Arbeitsstellung (Fig. 4) geschwenkt werden und in dieser ersten Arbeitsstellung verharren, dann stößt die Servostange 14 in der punktierten Lage gegen die Transportnase 19, wodurch die Kopfplatte 3 im Uhrzeigersinn verschwenkt wird. Die Magnetspule 20 bleibt zunächst unerregt. Mit dem Verschwenken der Kopfplatte 3 im Uhrzeigersinn fährt auch der Schenkel 11 in Richtung auf die Elektrohaltemagnetvorrichtung 15 vor. Die Nase 34 des Schlittens 26 stößt gegen die schräge Fläche 35 des längeren Armteiles 30c. Die Feder 36 ist so schwach bemessen, daß die Nase 34 die Fläche 35 und damit den längeren Armteil 30c entgegen dem Uhrzeigersinn nach außen wegdrückt. Der Führungsstift 26b bleibt in dem Endbereich 28a liegen. Das Funktionsteil 11 führt die erste Ankerplatte 24 gegen die Polschuhe 23c. Die Magnetspule 20 wird nun erregt, und die Ankerplatte 24 wird an den Polschuhen 23c festgehalten (Fig. 4). Damit ist gleichzeitig auch die Kopfplatte 3 in der Spielstellung, der ersten Arbeitsstellung, festgehalten. Ist der Spielbetrieb zu Ende oder soll auf schnellen Vor- bzw. Rücklauf umgeschaltet werden, dann wird die Magnetspule 20 entregt, und die Feder 37 schwenkt die Kopfplatte entgegendem Uhrzeigersinn wieder in die Ruhe- oder Stand-by-Stellung zurück. Aus dieser Ruhe- oder Stand-by-Stellung kann nun die Stellung für Schnellspulen oder wieder die Spielstellung angefahren werden. Wie das Anfahren der Spielstellung vor sich geht, wurde bereits beschrieben. Es wird nun das Erreichen und Festhalten der Schnellspulstellung (Fig. 6), d. h. der zweiten Arbeitsstellung erläutert.

Um in die Schnellspulstellung (Fig. 6) zu kommen, wird zunächst die Magnetspule 20 erregt. Die zweite Ankerplatte 25 liegt bereits an den Polschuhen 22c an, und zu der Kraft der Feder 36 kommt nun noch die magnetische Haltekraft. Es ist damit schwerer geworden, den längeren Armteil 30c entgegen dem Uhrzeigersinn wegzuschwenken. Die Servostange 14 läuft einmal vor und schwenkt die Kopfplatte 3 im Uhrzeigersinn. Die Nase 34 des Schlittens 26 ist nun nicht in der Lage, den längeren Armteil 30c wegzuschwenken. Das bedeutet, daß die Nase 34 vor der Fläche 35 des längeren Armteiles 30c ausweichen muß. Dies führt dazu, daß der Führungsstift 26b zu dem anderen Ende 28b der bogenförmigen Nut 28 geschoben wird. Durch dieses Verschieben rutscht der Schlitten 26 gleichzeitig unter einem Verdrehen in Richtung eines Pfeiles 26c mit dem Leitstift 24a in der Nut 27 in Richtung auf die Elektrohaltemagnetvorrichtung 15. Das bedeutet, daß der Schenkel 11 praktisch in Richtung auf die Elektrohaltemagnetvorrichtung 15 verlängert wird. Dieses Verlängern hat zur Folge, daß der Schenkel 11 nicht so weit in Richtung auf die Elektrohaltemagnetvorrichtung 15 vorfahren kann, wie zuvor in bezug auf die Spielstellung beschrieben wurde. Die Servostange 14 macht allerdings den gleichen Hub und dreht den Transporthebel 19 gegen seine Feder 19a mit Überhub in seine strichpunktierte Lage (Fig. 6). Die Kopfplatte 3 bleibt also ein wenig aus der Spielstellung nach Fig. 4 zurück, und das Magnetband legt sich nicht fest an den Magnetkopf 16 an. Damit ist die Stellung für schnellen Vor- und Rücklauf erreicht. Auch liegt keine der Andruckrollen 17a bzw. 17b an einer der Tonwellen 18a, 18b an.

Soll schneller Vor- oder Rücklauf beendet werden, dann wird die Magnetspule 20 entregt. Das führt dazu, daß sich die Ankerplatte 24 von den Polschuhen 23c löst, und die Feder 37 kann die Kopfplatte 3 entgegen dem Uhrzeigersinn wieder in die Ruhe- oder Stand-by-Stellung (Fig. 5) zurückdrehen. Aufgrund der eben beschriebenen Konstruktion muß immer in die Ruhe- oder Stand-by-Stellung zurückgefahren werden, ehe wieder in die Play- oder Schnellspulstellung vorgefahren werden kann.

Auf der Chassisplatte 1 sind zwei Motoren 40, 41 angeordnet. Der Motor 40 dient der Steuerung der Bewegungen der Kopfplatte 3 sowie dem Antrieb der Wickelteller 42, 43. Der Motor 41 dient über eine Peese 44 dem Antrieb der Tonwellen 18a, 18b. Dieser Antrieb findet statt über Schwungscheiben 45a, 45b. Die Peese 44 ist dabei S-förmig um die Schwingscheiben 45a, 45b gelegt, um gegenläufige Drehrichtungen der Tonwellen 18a, 18b zu bewirken. Die Motoren werden gesteuert über eine Logikschaltung 46, die an einer Schaltungsplatte 47 angeordnet ist. Die Schaltungsplatte 47 ist an der Chassisplatte 1 angeordnet.

Der Motor 40 treibt über eine Schneckenwelle 48 und ein Untersetzungsrad 49, das aus zwei Teilrädern 49a und 49b besteht, ein Zentralzahnrad 50 an. Um die Achse 50a des Zentralzahnrades 50 ist ein Schwenkarm 51 verschwenkbar, an dem drehbar ein Übertragungszahnrad 52 gelagert ist. Das Übertragungszahnrad 52 ist über eine nicht dargestellte Friktionskupplung zwischen dem Schwenkarm 51 und dem Zentralzahnrad 50 derart verschwenkbar, daß das Übertragungszahnrad 52 wahlweise den einen Wickelteller 42 oder den anderen Wickelteller 43 antreiben kann. Die Servostange 14 ist in Längsrichtung verschieblich antreibbar mittels eines Schaltrades 53. Das Schaltrad 53 gehört zu einem Schaltorgan 54 und ist an einem Betätigungsglied 55 des Schaltorganes 54 drehbar gelagert. Das Schaltorgan 54 hat weiterhin noch ein Freigabeglied 56 und ein Positionierglied 57. Das Schaltorgan 54 ist drehbar gelagert um eine Achse 58 und wird mit Hilfe eines federnden Armes 59 im Uhrzeigersinn belastet. Auf der Chassisplatte 1 ist weiterhin ein Steuerschalter 60 angeordnet, dessen Schalternase 61 mit dem Positionierglied 57 sowie einem Schaltansatz 62 der Servostange 14 zusammenarbeiten kann. Das Positionierglied 57 weist einen Leitstift 63 auf, der an der Servostange 14 in zwei Positionen anliegt. Die eine Position ist in Fig. 3, 4 und 6 dargestellt, während die andere Position in Fig. 5 dargestellt ist. Zur Positionierung in der Position nach Fig. 5 weist die Servostange eine Kante 64 auf, die die zweite Position steuert. Die erste Position wird bestimmt durch eine Nut 65 in der Servostange 14. Das dreiarmige Schaltorgan 54 weist an seinem Freigabeglied 56 eine breite Gabel 66 auf, die mit einem Begrenzungsstift 67 auf dem Schwenkarm 51 zusammenarbeitet.

Auf der Chassisplatte 1 sind zwei Nuten 68, 69 vorgesehen. Die Nut 68 ist dabei L-förmig ausgebildet, während die Nut 69 als Langloch in Verschieberichtung der Servostange 14 ausgebildet ist. Die Verschieberichtung der Servostange ist durch einen Doppelpfeil 70 angegeben. Die Nut 68 hat einen Nutarm 68a in Richtung des Doppelpfeiles 70 und einen senkrecht dazu verlaufenden Arm 68b in einer Richtung senkrecht zu dem Doppelpfeil 70. Diese senkrechte Richtung ist durch einen Pfeil 71 angedeutet. In die Nuten 68 und 69 greifen Leitstifte 72a, 72b eines Steuergliedes 73 ein. Dieses Steuerglied 73 wird mit Hilfe einer Feder 74 in zwei Richtungen gedrängt, und zwar einmal in Richtung auf eine Steuernase 75, die fest verbunden ist mit dem freien Ende des ersten Schenkels 9. Die Steuernase 75 liegt dabei in der Nähe der Transportnase 9. Die zweite Richtung, in der die Feder 74 das Steuerglied 73 drängt, ist die durch den Pfeil 71 angegebene Richtung. An dem Steuerglied 73 ist eine Schräge 76 vorgesehen, die mit einer Schräge 55a an dem Betätigungsglied 55 zusammenwirken kann. Das Steuerglied 73 ist L-förmig ausgebildet mit einem kurzen Armansatz 77, der einen Fahrstift 78 trägt. Dieser Fahrstift wirkt mit einer Einrichtungskulisse 79 in der Servostange 14 zusammen. Diese Einrichtungskulisse besteht aus zwei Bahnen 79a, 79b, die über eine Schadow-Klinke 80 verbunden sind. Diese Schadow-Klinke 80 ist derart federnd ausgebildet, daß der Fahrstift sie zwar in der einen durch einen Pfeil 81 angegebenen Richtung durchfahren kann, jedoch nicht in der Gegenrichtung. Nachdem der Fahrstift 78 durch die Schadow-Klinke 80 in die Bahn 79b eingelaufen ist, kann er nicht mehr in die Schadow-Klinke zurück, sondern muß in der Bahn 79b laufen, die in Richtung des Doppelpfeiles 70 verläuft.

Die Servostange 14 ist mit einem Kupplungsglied 82 versehen, das die Verbindung herstellt zu einem Liftschieber 83. Dieser Liftschieber 83 weist einen Ansatz 84 auf, der einseitig gegen das Kupplungsglied 82 drücken kann, und zwar in Richtung eines Pfeiles 85. Die Richtung des Pfeiles 85 stimmt überein mit der Einschiebrichtung einer Kassette 86 in einen Lademechanismus 87, zu dem der Liftschieber 83 gehört. Der Lademechanismus 87 weist einen Liftschacht 88 auf, der die Kassette 86 aufnimmt.

Der Liftschieber 83 ist in einer Schiebeführung 89 längsverschieblich in Richtung des Doppelpfeiles 70 geführt. Die Schieberführung 89 gehört dabei zu einem Kunststoffteil 90, das auf nicht dargestellte Weise mit der Chassisplatte 1 verbunden ist. Der Liftschieber 83 ist in der Darstellung nach Fig. 2 etwas U-förmig ausgebildet mit einem langen Schenkel 91, einer Basis 92 und einem kurzen Schenkel 93. In dem langen Schenkel 91 sind zwei schräge Kulissen 94 vorgesehen, in denen Stifte 95 des Liftschachtes 88 geführt sind. Der kurze Schenkel 93 ist ebenfalls mit einer schrägen Kulisse 96 versehen, die mit einem Lappen 97 des Liftschachtes zusammenwirkt. Auf diese Weise erfährt der Liftschacht 88 eine Art Dreipunkt-Lagerung oder -Führung gegenüber dem Liftschieber 83. Weiterhin ist eine Übertotpunktfeder 98 vorgesehen, die sich einerseits an dem Kunststoffteil 90 und andererseits an dem langen Schenkel 91 des Liftschiebers 83 abstützt.

Das Kunststoffteil 90 weist einen horizontalen Rand 90a auf, der begrenzt ist durch eine vertikale Randfläche 90b. Parallel zu der vertikalen Randfläche 90b erstreckt sich eine weitere vertikale Randfläche 90c. Der Abstand zwischen den beiden vertikalen Kanten 90b und 90c entspricht dem Abstand der Stifte 95, wobei die Stifte 95 sich zwischen den vertikalen Randflächen 90b und 90c längs dieser bewegen können.

Fig. 1 zeigt weiterhin, daß zwischen den Wickeltellern der Schwenkarm 51 angeordnet ist, der das Übertragungszahnrad 52 lagert. Der Schwenkarm 51 weist ein Gelenk 99 auf, an dem ein Stellhebel 100 angreift, der um ein Kipplager 101 verschwenken kann. In einem Gebiet der Verschwenkbewegung des Übertragungszahnrades 52 ist ein feststehendes Zahnsegment 102 angeordnet, an dem sich das Übertragungszahnrad 52 abrollen kann. Hierzu trägt das übertragungszahnrad an seiner Unterseite ein Teilzahnrad 52a. Auf der vom Gelenk 99 abliegenden Seite des Stellhebels 100 trägt der Stellhebel 100 einen Stift 103, der in einem Langloch 104 begrenzt verschieblich ist. Das Langloch 104 befindet sich in einem Schieber 105, der Stifte 106 aufweist, die in Langlöchern 107 der Chassisplatte verschieblich sind, und zwar parallel zum Doppelpfeil 70.

An der Chassisplatte 1 sind um Achsen 108 Exzenterscheiben 109 verschwenkbar, die mit Zahnsegmenten 110 verbunden sind. Diese Zahnsegmente 110 arbeiten zusammen mit Zahnstangen 111 des Schiebers 105. Somit kann durch ein Verschwenken des Stellhebels 100 um das Kipplager 101 der Stift 103 nach Erreichen der einen oder anderen Endkante des Langloches 104 den Schieber 105 in der einen oder anderen Richtung des Doppelpfeiles 70 verschieben. Bei diesem Verschieben findet ein Verdrehen der Exzenterscheiben 109 statt. Die Andruckrollen 17a, 17b sind in Bügeln 112a, 112b gelagert, die ihrerseits um Achsen 113 verschwenkbar sind. Die Achsen 113 sind auf der Kopfplatte 3 angeordnet. Die Bügel 112a und 112b weisen Stifte 114 auf, die die Oberflächen der Exzenterscheiben 109 abfahren können. Die Bügel 112a und 112b werden mit Hilfe von Federn 115a, 115b in Richtung auf die Tonwellen 18a, 18b federbelastet. Die Federn 115a und 115b drücken die Stifte 114 auch immer gegen die Exzenterscheiben 109.

Befindet sich keine Kassette in dem Laufwerk, dann nimmt dieses die in Fig. 3 dargestellte gegenseitige Stellung der einzelnen Bauteile ein. Soll das Gerät in Betrieb genommen werden, dann wird eine Kassette 86 in den Liftschacht 88 eingeschoben. Bei dem von Hand Einschieben der Kassette nimmt der Ansatz 84 des Liftschiebers das Kupplungsglied 82 mit. Zusammen mit dem Einschieben des Liftschiebers 83 verschiebt sich also auch gleich die Servostange 14. Nun spannt sich die Übertotpunktfeder 98, und nach dem Überschreiten des Übertotpunktes gibt sie ihre Vorspannkraft ab, indem sie den Liftschieber weiter einzieht, ohne daß die Kassette 86 noch von Hand berührt wird. Zusammen mit dem weiteren Einschieben des Liftschiebers verschiebt sich auch die Servostange weiter in der Einzugsrichtung 85. Während dieser Verschiebebewegung der Servostange 14 stoßen die Schrägen 55a und 76 aufeinander, und das Schaltorgan 54 wird entgegen dem Uhrzeigersinn verschwenkt. Das Schaltrad 53 kuppelt dadurch das Zentralzahnrad 50 mit der Servostange. Das Verschwenken des Schaltorgans 54 hat gleichzeitig zur Folge, daß die Schalternase 61 von dem Positionierglied 57 freigegeben wird. Diese Freigabe ist ein Kommando für die Logikschaltung 46, den Motor 40 anlaufen zu lassen. Dadurch wird die Servostange mit Hilfe des Motors 40 weiter in der Einzugsrichtung 85 verschoben. Der Ansatz 84 braucht das Kupplungsglied 82 nun nicht mehr mitzunehmen, und der Liftschieber fährt allein mit Hilfe der Kraft der Übertotpunktfeder in Einschieberichtung 45 weiter, und zwar so weit, bis die Stifte 95 längs der vertikalen Randflächen 90b und 90c nach unten gleiten können, wobei die Stifte 95 zugleich in den schrägen Kulissen 94 nach unten gleiten. Gleichzeitig gleitet der Lappen 97 auf der Kulisse 96 nach unten. Dies Nach-Unten-Gleiten ist beendet, wenn der Liftschieber 83 seine hintere Endposition nach Fig. 2 erreicht hat. In dieser Position hat der Liftschacht 88 seine hintere und untere Stellung erreicht, und die Kassette 86 ist auf Wickeldorne 116, 117 aufgesetzt.

Bei der Bewegung der Servostange 14 in Richtung des Einzugspfeiles 85 ist der Fahrstift 78 des Steuergliedes 73 in der Bahn 79a in Richtung des Pfeiles 81 eingelaufen. Die Einlaufposition nimmt der Fahrstift 78 ein unter Wirkung der Feder 74. Das Steuerglied 73 hat sich dabei um den Leitstift 72b verschwenkt. Diese Verschwenkrichtung ist durch Pfeil 118 angegeben. Der Fahrstift 78 läuft über die Schadow-Klinke 80 in die Bahn 79b ein. Dabei verschwenkt das Steuerglied 73 in Richtung eines Pfeiles 119. Durch dieses Veschwenken ist das Schaltorgan 54 über die Schrägen 55a und 76 so weit entgegen dem Uhrzeigersinn verschwenkt worden, daß der Begrenzungsstift 67 zwischen die Arme der breiten Gabel 66 gelangt. Diese breite Gabel sorgt dafür, daß das Übertragungszahnrad 52 mit keinem der Wickelteller 42 oder 43 in Berührung kommen kann.

Der Antrieb der Servostange 14 über das Schaltrad 53 ist in der Ausfahrrichtung entgegen dem Pfeil 85 selbsteinziehend. Das bedeutet in der Stand-by-Stellung gemäß Fig. 5, daß der Leitstift 63 auf einer Ecke 125 zwischen der Kante 64 und der Nut 65 festgehalten wird. Dies ist die Position, in der die breite Gabel 66 gegen den Begrenzungsstift 67 drückt und das Übertragungszahnrad 52 von den Wickeltellern 42 oder 43 wegdrückt. In der Einzugsrichtung gemäß Pfeil 85 ist der Antrieb mit dem Schaltrad 53 demgegenüber selbstlösend. Dies bedeutet, daß das Schaltrad bei zugsbewegungen der Servostange, wenn das Steuerglied 73 keine Wegbegrenzung vorgibt, von sich aus mit dem Zentralzahnrad außer Eingriff kommen kann. In umgekehrter Ausfahrrichtung sorgt die selbsteinziehende Richtung des Schaltrades 53 dafür, daß der Leitstift 63 auf der Ecke 125 hängen bleibt, ohne daß der besonders geführt ist.

Um nun in die Play-Stellung nach Fig. 4 zu kommen, fährt die Servostange 14 so weit nach rechts, wie dies aus Fig. 4 mit getrichelten Linien angedeutet ist. In dieser Stellung hat die Servostange 14 die Kopfplatte 3 auf die bereits beschriebene Weise in ihre Spielstellung verschwenkt, wie es aus Fig. 1 und 4 zu ersehen ist. In der äußerst rechten Stellung der Servostange 14 hat der Schaltansatz 62 der Servostange die Schalternase 61 berührt. Diese Berührung hat zur Folge, daß die Logikschaltung 46 dem Motor 40 den Befehl gibt, seine Drehrichtung umzukehren. Hat der Motor 40 über den Ansatz 62 den Befehl bekommen, seine Drehrichtung zu ändern, bleibt seine Spannung noch hoch. Die Servostange 14 läuft nun entgegen dem Pfeil 85 nach links wieder zurück. Dabei haben sich das Steuerglied 73 und das Schaltorgan 54 voneinander gelöst. Aufgrund der Kraft der Feder 59 verschwenkt das Schaltorgan 54 im Uhrzeigersinn, wobei der Begrenzungsstift 67 von der breiten Gabel 66 freigegeben wurd. Bei diesem im Uhrzeigersinn Verschwenken hat das Positionierglied 57 die Schalternase 61 erneut angestoßen. Dieses erneute Anstoßen hat zur Folge, daß die Logikschaltung 46 den Motor 40 auf niedrige Spannung umschaltet. Dadurch dreht der Motor mit niedrigerem Drehmoment weiter. Das hohe Drehmoment braucht der Motor nämlich nur für die Umsteuerfunktionen, nicht jedoch für den normalen Spielbetrieb. Bei dem Drehen im Uhrzeigersinn hat sich das Schaltrad 53 gleichzeitig von dem Zentralzahnrad 50 gelöst, und die Servostange 14 ist damit nicht mehr angetrieben. Gleichzeitig hat mit dem Nach-Rechts-Verschieben der Servostange 14 in ihre äußerst rechts gelegene Stellung und dem Verschwenken der Kopfplatte 3 sich das Steuerglied 73, da es sich auch in Verschieberichtung aufgrund der Federkraft 74 verschoben hat, von der Schräge 55a des Schaltorganes 54 entfernt. Die Feder 79 verstellt das Schaltorgan 54 im Uhrzeigersinn, und der Leitstift 63 nimmt seine andere Position zur Servostange ein. Das Freigabeglied 56 hat sich dabei ebenfalls im Uhrzeigersinn so weit von dem Begrenzungsstift 67 entfernt, daß das Übertragungszahnrad 52 nun, wie Fig. 4 zeigt, an dem Wickelteller 42 anliegen und den Wickelteller 42 antreiben kann.

Gleichzeitig hat eine Druckrollenverstellung stattgefunden. Der Stellhebel 100 hat den Schieber 105 in Richtung eines Pfeiles 120 nach links verschoben. Die Zahnstangen 111 haben über die Zahnsegmente 110 die Exzenterscheiben 109 im Uhrzeigersinn verdreht. Dabei hat der Stiftt 114 des rechts gelegenen Bügels 112a die Oberfläche 121 des Exzenters 109 verlassen und ist gegen eine Kante 122 aufgelaufen, wobei die Feder 115a den Stift 114 ständig gegen die Kante 122 drückt. Gleichzeitig ist die Andruckrolle 17a damit gegen die Tonwelle 18a angelegt worden. Das Ablaufen des Stiftes 114 von der Oberfläche 121 über eine Ecke 123 zu der Kante 122 hat gleichzeitig zur Folge gehabt, daß die zuvor von dem Stellhebel 100 eingeleitete Verschiebung des Schiebers 105 in Richtung des Pfeiles 120 nun von dem Stift 114 übernommen wurde. Während nun der Stift 114 der rechten Exzenterscheibe 109 auf die niedrigere Kante 122 aufgelaufen ist, ist der Stift 114 der linken Exzenterscheibe 109 von der Kante 122 über die Ecke 123 auf die Oberfläche 121 aufgelaufen. Dies hat bewirkt, daß der Bügel 112b im Uhrzeigersinn gegen die Kraft der Feder 115b verschwenkt wurde und sich die Andruckrolle 17b von der Tonwelle 18b abgehoben hat.

Die Steuerung des Gerätes erfolgt immer über die Logikschaltung 46. Steuerbefehle von außen gehen also immer über Tasten oder dergl. zur Logikschaltung. Das gleiche kann selbstverständlich bei Bandende stattfinden. Soll die Laufrichtung des Gerätes umgekehrt werden, dann wird entweder bei Bandende oder von einer Taste über die Logikschaltung an den Motor 40 der Befehl gegeben, seine Drehrichtung umzukehren. Diese Drehrichtungsumkehr bewirkt, daß der Stellhebel 100 zunächst den Schieber 105 in Richtung eines Pfeiles 124 verstellt, bis an der linken Exzenterscheibe 109 der Stift 114 über die Eckel 123 hinweg gelaufen ist und der Stift 114 dann über die Kante 122 die weitere Verschiebung des Schiebers 105 in Richtung des Pfeiles 124 übernommen hat. Dabei hat sich die Andruckrolle 17a von der Tonwelle 18a gelöst, während sich die Andruckrolle 17b an die Tonwelle 18b angelegt hat. Gleichzeitig ist das Übertragungszahnrad 52 von dem Wickelteller 42 übergeschwenkt zu dem Wickelteller 43.

Soll der Spielbetrieb beendet werden, was beispielsweise durch ein Tasten-Eindrücken oder ein Ausbleiben der Betriebsspannung geschehen kann, dann wird die Haltemagnetvorrichtung 15 entregt, und die Kopfplatte 3 verschwenkt unter der Wirkung der Feder 37 entgegen dem Uhrzeigersinn. Diese Verschwenk-Endstellung ist in Fig. 5 dargestellt. Die Transportnase 19 ist dabei gegen das rechte Ende der Servostange 14 aufgelaufen. Gleichzeitig hat die Steuernase 75 das Steuerglied 73 nach links verschoben und in Anlage mit der Schräge 55a des Schaltorganes 54 gebracht. Das Schaltrad 63 kuppelt nunmehr wieder das Zentralzahnrad 50 mit der Servostange 14. Gleichzeitig hat die breite Gabel 66 den Begrenzungsstift 67 so weit zur Mitte geschwenkt, daß das Übertragungszahnrad 52 von dem Wickelteller 42 abgehoben ist. Durch die Bewegung des Schaltorgans 54 entgegen dem Uhrzeigersinn hat das Positionierglied 57 die Schalternase 61 freigegeben. Dieses Freigeben bedeutet für die Logikschaltung 46, daß ein neuer Befehl kommt. Dieser Befehl kommt durch Drücken einer Bedienungstaste. Diese Bedienungstaste sagt der Logikschaltung 46, wie es weitergehen soll. Weitergehen kann es wie folgt:
1. Für den Fall, daß Stand-by gewünscht wird, schaltet die Logikschaltung 46 den Motor 40 aus.
2. Für den Fall, daß Eject gewünscht wird gemäß Fig. 3, wird die Servostange 14 nach links bewegt, was über das Kupplungsglied 82 zum Auswerfen der Kassette 86 führt. Die Übertotpunktfeder 98 wirft dabei die Kassette aus.
3. Ist schneller Vor- oder Rücklauf gewünscht, dann wird die Haltemagnetvorrichtung 15 auf bereits beschriebene Weise erregt und die Servostange nach rechts gefahren, wie in Fig. 6 gezeigt wird. Durch Verlängerung des Armes 11 kann die Kopfplatte nicht in die Play-Stellung gelangen. In dieser Stellung sorgt die Logikschaltung immer noch für ein hohes Drehmoment des Motors, damit ein schneller Bandtransport stattfinden kann.
4. Ist erneuter Spielbetrieb gewünscht, dann sorgt die Logikschaltung 46 dafür, daß die Servostange wieder nach rechts geschoben wird (Fig. 4), wobei die Kopfplatte in ihre Spielstellung verschwenkt.

## Patentansprüche

1. Magnetbandkassettengerät mit einem Laufwerk, das Wickelteller (42, 43) für ein Magnetband und eine von einem Motor (40) angetriebene, hin und zurück längsverschiebliche Servostange (14) aufweist, die Funktionsteile des Gerätes, wie eine Kopfplatte (3), einen Lademechanismus (87) und über ein Steuerglied (73) und Schaltmittel (60) eine Logikschaltung (46) steuert, dadurch gekennzeichnet, daß der die Servostange (14) verschiebende Motor zusätzlich auch dem Antrieb der Wickelteller (42, 43) dient und daß von der Stellung des Steuergliedes (73), dessen Position bestimmt wird von der Servostange (14) und der Kopfplatte (3), die Stellung eines drehbaren Schaltorgans (54) abgeleitet wird, das die Schaltmittel (60) für die Logikschaltung (46) des Motors (40) bedient, das den Motor (40) mit der Servosstange (14) kraftschlüssig kuppelt und das die Wickelteller (42, 43) während der Umschaltung von Gerätefunktionen vom Motor (40) freistellt.

2. Magnetbandkassettengerät nach Anspruch 1, dadurch gekennzeichnet, daß das Schaltorgan (54) ein Schaltrad (53) trägt, das während der Umschaltung der Gerätefunktionen den Motor (40) mit der Servostange (14) kraftschlüssig kuppelt.

3. Magnetbandkassettengerät nach Anspruch 2, dadurch gekennzeichnet, daß die Einleitung des Kupplungsvorganges des Schaltrades (53) immer vom Zusammenwirken von Steuerglied (73) und Schaltorgan (54) bewirkt wird, wobei das Schaltorgan (54) in eine Kupplungsposition geschwenkt wird, in welcher Kupplunsposition es verbleibt durch das Zusammenwirken mit dem Steuerglied (73) oder der Steuerstange (14).

4. Magnetbandkassettengerät nach einem der Ansprüche 1 bis 3, dadurch gekennzeichnet, daß das Schaltorgan (54) ein Betätigungsglied (55), ein Freigabeglied (56) und ein Positionierglied (57) aufweist, die zusammenarbeiten mit dem Steuerglied (73), mit einem Schwenkarm (51) des Wickeltellerantriebes und mit der Servostange (14).

5. Magnetbandkassettengerät nach Anspruch 4, dadurch gekennzeichnet, daß das Schaltorgan (54) als in einer Drehrichtung federbelasteter, dreiarmiger Schalthebel ausgebildet ist, der die genannten Glieder (55, 56, 57) aufweist.

6. Magnetbandkassettengerät nach Anspruch 4, dadurch gekennzeichnet, daß das Betätigungsglied (55) das Schaltrad (53) trägt und eine Schräge (55a) aufweist, über die das Betätigungsglied (55) mit einer Schräge (76) des Steuergliedes (73) zusammenwirkt.

7. Magnetbandkassettengerät nach Anspruch 4, dadurch gekennzeichnet, daß das Positionierglied (57) einen Leitstift (63) trägt, der an der Servostange (14) in zwei Positionen anliegen kann.

8. Magnetbandkassettengerät nach Anspruch 4, dadurch gekennzeichnet, daß das Freigabeglied (56) eine breite Gabel (66) trägt, die die Bewegung des Schwenkarmes (51) während der Umschaltung der Gerätefunktionen derart begrenzt, daß der Antrieb der Wickelteller (42, 43) unwirksam ist.

9. Magnetbandkassettengerät nach Anspruch 1, dadurch gekennzeichnet, daß das Steuerglied (73) als Steuerhebel ausgebildet ist, dessen eines Ende mit der Kopfplatte (3) und dessen anderes Ende mit der Servostange (14) zusammenwirken, wobei der Steuerhebel (73) längsverschieblich und drehbar geführt ist, und daß Federmittel (74) vorgesehen sind, die den Steuerhebel (73) in Richtung auf die Kopfplatte (3) und in einer Drehrichtung (118) drängen.

10. Magnetbandkassettengerät nach Anspruch 9, dadurch gekennzeichnet, daß das genannte andere Ende einen Fahrstift (78) aufweist, der in einer Einrichtungskulisse (79) der Servostange (14) umlaufen kann während der Hin- und Zurückbewegung der Servostange (14).

11. Magnetbandkassettengerät nach Anspruch 1, dadurch gekennzeichnet, daß die Kopfplatte (3) ein Basisteil (7) mit Magnetkopf (16) und Andruckrollen (17a, 17b) sowie einen ersten Schenkel (9) aufweist und um einen Eckbereich (12) zwischen Basisteil (7) und erstem Schenkel (9) schwenkbar angeordnet ist, wobei am freien Ende des ersten Schenkels 89) eine Steuernase (75) und eine gegenüber dem ersten Schenkel (9) federbelastete Transportnase (19) aufweist, die mit dem Steuerglied (73) bzw. der Servostange (14) zusammenarbeiten.

12. Magnetbandkassettengerät nach Anspruch 11, dadurch gekennzeichnet, daß die Kopfplatte (3) U-förmig ausgebildet ist und einen zweiten Schenkel (11) aufweist, dessen Länge gegenüber der Basis (7) verlängerbar ist und der in der Nähe seines Freien Endes mit einem Elektromagneten (15) zusammenwirkt zum Festlegen der Kopfplatte (3) in zwei Arbeitspositionen.

13. Magnetbandkassettengerät nach Anspruch 1, dadurch gekennzeichnet, daß die Schaltmittel (60) einen Steuerschalter mit einer Schalternase (61) aufweisen, die entweder von dem Schaltorgan (54) oder von der Servostange (14) schaltbar ist.

14. Magnetbandkassettengerät nach Anspruch 13, dadurch gekennzeichnet, daß die Schalternase (61) von dem Positionierglied (57) oder einem Schaltansatz (62) an der Servostange (14) schaltbar ist.

15. Magnetbandkassettengerät nach Anspruch 1, dadurch gekennzeichnet, daß die Servostange (14) mit einem Liftschieber (83) des Lademechanismus (87) über ein Kupplungsglied (82) zusammenwirkt, wobei der Liftschieber (83) die Höhenlage eines Liftschachtes (88) des Lademechanismus (87) steuert.

16. Magnetbandkassettengerät nach Anspruch 15, dadurch gekennzeichnet, daß der Liftschieber (83) parallel zur Servostange (14) gegenüber dem Gerätechassis (1) verschieblich ist und an dem Gerätechassis (1) über eine Übertotpunktfeder (98) abgestützt ist.

17. Magnetbandkasseettengerät nach Anspruch 16, dadurch gekennzeichnet, daß im Zusammenhang mit dem Einschieben einer Kassette (86) in den Liftschacht (88) die Übertotpunktfeder (98) über den Liftschieber (83) und das Kupplungsglied (82) die Servostange (14) in Richtung auf die Transportnase (19) über einen bestimmten Weg verschiebt.

18. Magnetbandkassettengerät nach Anspruch 17, dadurch gekennzeichnet, daß bei dieser Bewegung der Fahrstift (78) des Steuergliedes (73) einen Teil der Einrichtungskulisse (79) durchläuft und dabei das Steuerglied (73) derart verstellt, daß seine Schräge (76) über die Schräge (55a) des Betätigungsgliedes (55) den Motor (40) über das Schaltrad (53) mit der Servostange (14) kuppelt und die Schaltmittel (60) bedient.

## Claims

1. A magnetic-tape-cassette apparatus having a tape deck comprising turntables (42, 43) for a magnetic tape and a servo rod (14) which is driven by a motor (40) and which is axially movable in opposite directions and which controls functional elements of the apparatus, such as a head-mounting plate (3), a loading mechanism (87) and *via* a control member (73) and switching means (60), a logic circuit (46), characterized in that the motor which moves the servo rod (14) is additionally used for driving the turntables (42, 43), and from the position of the control member (73), which position is dictated by the servo rod (14) and the head-mounting plate (3), the position of a rotatable switching member (54) is derived, which switching member is actuates the switching means (60) for the logic circuit (46) for the motor (40), to provide the force-sustained coupling between the motor (40) and the servo rod (14) and to disengage the turntables (42,43) from the motor (40) during the change-over of apparatus functions.

2. A magnetic-tape-cassette apparatus as claimed in Claim 1, characterized in that the switching member (54) carries a switching wheel (53), which provides the force-sustained coupling between the motor (40) and the servo rod (14) during the change-over of apparatus functions.

3. A magnetic-tape-cassette apparatus as claimed in Claim 2, characterized in that the coupling process of the switching wheel (53) is always initiated by the cooperation between the control member (73) and the switching member (54), the switching member (54) being pivoted into a coupling position, in which it is held by the cooperation with the control member (73) or with the servo rod (14).

4. A magnetic-tape-cassette apparatus as claimed in any one of the Claims 1 to 3, characterized in that the switching member (54) comprises an actuating limb (55), a release limb (56) and a positioning limb (57), which are adapted to cooperate with the control member (73), with a pivotal arm (51) of the turntable drive, and with the servo rod (14), respectively.

5. A magnetic-tape-cassette apparatus as claimed in Claim 4, characterized in that the switching member (54) is constructed as a three-arm switching lever which is spring-loaded in one pivotal direction and which comprises said limbs (55, 56, 57).

6. A magnetic-tape-cassette apparatus as claimed in Claim 4, characterized in that the actuating limb (55) carries the switching wheel (53) and comprises an inclined surface (55a) *via* which the actuating limb (55) cooperates with an inclined surface (76) of the control member (73).

7. A magnetic-tape-cassette apparatus as claimed in Claim 4, characterized in that the positioning limb (57) carries a guide pin (63) which is adapted to engage with the servo rod (14) in two positions.

8. A magnetic-tape-cassette apparatus as claimed in Claim 4, characterized in that the release limb (56) carries a wide-jaw fork (66) which is adapted to limit the movement of the pivotal arm (51) during switching-over of the apparatus functions so as to render the drive of the turntables (42, 43) inoperative.

9. A magnetic-tape-cassette apparatus as claimed in Claim 1, characterized in that the control member (73) is constructed as a control lever having one end adapted to cooperate with the head-mounting plate (3) and another end adapted to cooperate with the servo rod (14), the control lever (73) being guided so as to be axially movable and pivotable, and spring means (74) are provided to urge the control lever (73) towards the head-mounting plate (3) and in one pivotal direction (118).

10. A magnetic-tape-cassette apparatus as claimed in Claim 9, characterized in that said other end carries a follower pin (78) which is movable in a unidirectional guideway (79) of the servo rod (14) during the forward and backward movement of the servo rod (14).

11. A magnetic-tape-cassette apparatus as claimed in Claim 1, characterized in that the head-mounting plate (3) comprises a base (7), carrying a magnetic head (16) and pressure rollers (17a, 17b), and a first limb (9), and is pivotable about a corner portion (12) between the base (7) and the first limb (9), the free end of the first limb (89) being provided with a control projection (75) and a transport projection (19) which is spring-loaded towards the first limb (9), which projections are adapted to cooperate with the control member (73) and the servo rod (14), respectively.

12. A magnetic-tape-cassette apparatus as claimed in Claim 11, characterized in that the head-mounting plate (3) is U-shaped and comprises a second limb (11) which is extensible to increase its length relative to the base (7) and which in the proximity of the free end can cooperate with an electromagnet (15) to hold the head-mounting plate(3) in two operating positions.

13. A magnetic-tape-cassette apparatus as claimed in Claim 1, characterized in that the switching means (60) comprise a control switch having a switch actuator (61) which can be actuated either by the switching member (54) or by the servo rod (14).

14. A magnetic-tape-cassette apparatus as claimed in Claim 13, characterized in that the switch actuator (61) can be actuated by the positioning limb (57) or by a switching projection (62) on the servo rod (14).

15. A magnetic-tape-cassette apparatus as claimed in Claim 1, characterized in that the servo rod (14) is adapted to cooperate with a lift slide (83) of the loading mechanism (87) *via* a coupling member (82), the lift slide (83) controlling the height position of a lift compartment (88) of the loading mechanism (87).

16. A magnetic-tape-cassette apparatus as claimed in Claim 15, characterized in that the lift slide (83) is movable relative to the apparatus chassis (1) and parallel to the servo rod (14) and is supported on the apparatus chassis (1) *via* an over-centre spring (98).

17. A magnetic-tape-cassette apparatus as claimed in Claim 16, characterized in that the over-centre spring (98), in conjunction with the insertion of a cassette (86) into the lift compartment (88), moves the servo rod (14) over a given distance towards the transport projection (19) *via* the lift slide (83) and the coupling member (82).

18. A magnetic-tape-cassette apparatus as claimed in Claim 17, characterized in that during said movement the follower pin (78) of the control member (73) traverses a part of the unidirectional guideway (79) and thereby actuates the control member (73) in such a way that its inclined surface (76), *via* the inclined surface (55a) of the actuating limb (55), couples the motor (40) to the servo rod (14) *via* the switching wheel (53) and actuates the switching means (60).

## Revendications

1. Appareil à cassette de bande magnétique comprenant un mécanisme d'entraînement qui comporte des plateaux d'enroulement (42, 43) pour une bande magnétique et une barre d'asservissement (14) entraînée par un moteur (40) et animée d'un mouvement de va-et-vient dans le sens de sa longueur, laquelle barre commande les parties fonctionnelles de l'appareil, notamment une plaque porte-tête (3), un mécanisme de chargement (87) et, via un élément de commande (73) et un moyen de commutation (60), un circuit logique (46), caractérisé en ce que le moteur déplaçant la barre d'asservissement (14) sert également à entraîner les plateaux d'enroulement (42, 43) et que de la position de l'élément de commande (73), qui est déterminée par la barre d'asservissement (14) et par la plaque porte-tête (3), est déduite la position d'un organe de commutation pivotant (54), qui actionne le moyen de commutation (60) pour le circuit logique (46) du moteur (40), qui accouple le moteur (40) à transfert de force à la barre d'asservissement (14) et libère les plateaux d'enroulement (42, 43) du moteur (40) au cours de la manoeuvre des fonctions de l'appareil.

2. Appareil à cassette de bande magnétique selon la revendication 1, caractérisé en ce que l'organe de commutation (54) porte une roue de commutation (53) qui accouple le moteur (40) à transfert de force à la barre d'asservissement (14) au cours de la manoeuvre des fonctions de l'appareil.

3. Appareil à cassette de bande magnétique selon la revendication 2, caractérisé en ce que l'amorçage de l'opération d'accouplement de la roue de commutation (53) est toujours assuré par la coopération de l'élément de commande (73) et de l'organe de commutation (54), l'organe de commutation étant amené par pivotement dans une position d'accouplement dans laquelle il se maintient par coopération avec l'élément de commande (73) ou la barre d'asservissement (14).

4. Appareil à cassette de bande magnétique selon l'une quelconque des revendications 1 à 3, caractérisé en ce que l'organe de commutation (54) comporte un élément d'actionnement (55), un élément de libération (56) et un élément de positionnement (57) qui coopèrent avec l'élément de commande (73), avec un bras pivotant (51) de l'entraînement des plateaux d'enroulement et avec la barre d'asservissement (14).

5. Appareil à cassette de bande magnétique selon la revendication 4, caractérisé en ce que l'organe de commutation (54) se présente sous la forme d'un levier de commutation à trois bras rappelé par un ressort dans un sens de pivotement, ce levier comportant lesdits éléments (55, 56, 57).

6. Appareil à cassette de bande magnétique selon la revendication 4, caractérisé en ce que l'élément d'actionnement (55) porte la roue de commutation (53) et présente un chanfrein (55a) par lequel l'élément d'actionnement (55) coopère avec un chanfrein (76) de l'élément de commande (73).

7. Appareil à cassette de bande magnétique selon la revendication 4, caractérisé en ce que l'élément de positionnement (57) porte un ergot de guidage (63) qui peut se placer dans deux positions sur la barre d'asservissement (14).

8. Appareil à cassette de bande magnétique selon la revendication 4, caractérisé en ce que l'élément de libération (56) porte une large fourche (66) qui limite le déplacement du bras pivotant (51) au cours de la manoeuvre des fonctions de l'appareil, de telle sorte que l'entraînement des plateaux d'enroulement (42, 43) soit supprimé.

9. Appareil à cassette de bande magnétique selon la revendication 1, caractérisé en ce que l'élément de commande (73) à la forme d'un levier de commande dont une extrémité coopère avec la plaque porte-tête (3) et dont l'autre extrémité coopère avec la barre d'asservissement (14), de sorte que le levier de commande (73) est guidé à coulissement longitudinal et à pivotement et des moyens élastiques (74) sont prévus pour solliciter le levier de commande (73) en direction de la plaque porte-tête (3) et dans un sens de pivotement (118).

10. Appareil à cassette de bande magnétique selon la revendication 9, caractérisé en ce que ladite autre extrémité porte un ergot de translation (78) qui peut circuler dans une coulisse unidirectionnelle (79) de la barre d'asservissement (14) pendant le mouvement de va-et-vient de celle-ci.

11. Appareil à cassette de bande magnétique selon la revendication 1, caractérisé en ce que la plaque porte-tête (3) présente une partie de base (7) avec une tête magnétique (16) et des galets presseurs (17a, 17b) ainsi qu'une première branche (9) et est montée à pivotement dans une zone angulaire (12) située entre la partie de base (7) et la première branche (9), étant entendu qu'à l'extrémité libre de la première branche (9) sont prévus un taquet de commande (75) et un taquet de transport (19) sollicité par ressort par rapport à la première branche (9), ces taquets coopérant respectivement avec l'élément de commande (73) et avec la barre d'asservissement (14).

12. Appareil à cassette de bande magnétique selon la revendication 11, caractérisé en ce que la plaque porte-tête (3) est conformée en U et présente une seconde branche (11) dont la longueur peut être allongée par rapport à la base (7) et qui coopère, au voisinage de son extrémité libre, avec un électroaimant (15) pour immobiliser la plaque porte-tête (3) dans deux positions de travail.

13. Appareil à cassette de bande magnétique selon la revendication 1, caractérisé en ce que le moyen de commutation (60) comprend un commutateur de commande avec un taquet (61) qui peut être commuté par l'organe de commutation (54) ou par la barre d'asservissement (14).

14. Appareil à cassette de bande magnétique selon la revendication 13, caractérisé en ce que le taquet de commutateur (61) peut être commuté par l'élément de positionnement (57) ou par une saillie de commutation (62) sur la barre d'asservissement (14).

15. Appareil à cassette de bande magnétique selon la revendication 1, caractérisé en ce que la barre d'asservissement (14) coopère avec un coulisseau élévateur (83) du mécanisme de chargement (87) via un élément d'accouplement (82), le coulisseau élévateur (83) commandant la position en hauteur d'un puits élévateur (88) du mécanisme de chargement (87).

16. Appareil à cassette de bande magnétique selon la revendication 15, caractérisé en ce que le coulisseau élévateur (83) est mobile parallèlement à la barre d'asservissement (14) par rapport au châssis (1) de l'appareil et prend appui sur le châssis (1) de l'appareil via un ressort à dépassement de point mort (98).

17. Appareil à cassette de bande magnétique selon la revendication 16, caractérisé en ce que, lorsqu'une cassette (86) est introduite dans le puits élévateur (88), le ressort à dépassement de point mort (98) déplace la barre d'asservissement (14) en direction du taquet de transport (19) suivant un trajet déterminé via le coulisseau élévateur (83) et l'élément d'accouplement (82).

18. Appareil à cassette à bande magnétique selon la revendication 17, caractérisé en ce qu'au cours de ce déplacement, l'ergot de translation (78) de l'élément de commande (73) parcourt une partie de la coulisse unidirectionnelle (79) et déplace de ce fait l'élément de commande (73), de telle sorte que son chanfrein (76) accouple, via le chanfrein (55a) de l'élément d'actionnement (55), le moteur (40) à la barre d'asservissement (14) par l'intermédiaire de la roue de commutation (53) et commande le moyen de commutation (60).
